Europäisches Patentamt

European Patent Office

Office européen des brevets

(11) Numéro de publication : **0 064 112**
**B1**

# (12) FASCICULE DE BREVET EUROPÉEN

(45) Date de publication du fascicule du brevet :
28.11.84

(21) Numéro de dépôt : 81400714.2

(22) Date de dépôt : 06.05.81

(51) Int. Cl.³ : **A 01 F 15/00, A 01 D 89/00**

(54) **Presse à balles cylindriques.**

(43) Date de publication de la demande :
10.11.82 Bulletin 82/45

(45) Mention de la délivrance du brevet :
28.11.84 Bulletin 84/48

(84) Etats contractants désignés :
DE FR GB IT NL

(56) Documents cités :
DE-A- 2 523 404
DE-B- 1 065 652
FR-A- 2 315 213
FR-A- 2 383 598
GB-A-   685 224
GB-A-   931 518
US-A- 2 893 537

(73) Titulaire : **JOHN DEERE (Société Anonyme)**
**8, Quai de la Madeleine**
**F-45000 Orléans (FR)**

(72) Inventeur : **Giani, Angel**
**17, Avenue Jean Dominique**
**F-70100 Gray-la-Ville (FR)**

(74) Mandataire : **Pruvost, Marc Henri et al**
**Cabinet ORES 6, Avenue de Messine**
**F-75008 Paris (FR)**

Jouve, 18, rue St-Denis, 75001 Paris, France

EP 0 064 112 B1

## Description

La présente invention se rapporte aux presses à balles cylindriques ou rondes du type dans lequel un ramasseur monté à l'avant de la presse ramasse sur le sol des produits de récolte généralement disposés en andains et les transfère à une chambre de formation d'une balle dans laquelle la nappe de produits de récolte provenant du ramasseur, généralement comprimée entre deux rouleaux, subit un mouvement d'enroulement entre des jeux de bandes ou courroies sans fin entraînées de façon positive, la balle étant, après sa formation, éjectée hors de la presse par une porte arrière.

Les presses à balles existantes sont équipées d'un ramasseur dont la largeur correspond sensiblement à celle de la presse, afin de ramasser pour la formation d'une balle les produits constituant un andain. Toutefois, la tendance actuelle dans la conception des machines agricoles correspond à une augmentation de rendement et en conséquence à un accroissement de la taille des machines. Ceci est le cas, notamment des moissonneuses-batteuses. Or, il n'est guère possible d'augmenter de manière correspondante la taille et notamment la largeur des presses à balles cylindriques, car ceci aboutirait à la formation de balles ayant des dimensions en longueur telles qu'il en résulterait des difficultés de manutention, d'autant plus que le poids d'une telle balle croît bien entendu en fonction de ses dimensions. En outre, il serait difficile d'obtenir, sur une presse de grande largeur, l'uniformité désirable dans la densité et le diamètre de la balle sur sa longueur, c'est-à-dire sur la largeur de la presse.

Le but de l'invention est d'apporter une solution au problème ainsi posé.

Il est déjà connu, dans les ramasseuses-hacheuses ou les ensileuses, de conjuguer une vis transporteuse transversale à un ramasseur, afin d'amener à un orifice central, généralement de dimensions réduites compte tenu de la nature des dispositifs de hachage prévus en aval, les produits de récolte recueillis par le ramasseur lors de la progression de la machine. Un agencement de ce genre se retrouve par exemple dans la demande de brevet allemand 1 065 652 et dans le modèle d'utilité allemand 1 844 842. Les produits concentrés par la vis transporteuse transversale vers le milieu de la machine sont, comme indiqué, acheminés à partir de cette vis transporteuse à travers un canal ou passage central, pour parvenir à un dispositif de hachage.

On a également déjà proposé, dans le brevet britannique 685 224 et dans le brevet U.S. 2 893 537, de prévoir sur une presse à balles rectangulaires un ramasseur large conjugué à une vis transporteuse transversale à double filet qui amène les produits ramassés à un transporteur ou convoyeur aval de type quelconque, lequel a pour objet de transférer ces produits à un dispositif de pressage prévu sur la machine.

Un agencement de ce type n'est toutefois pas utilisable sur les presses à balles cylindriques ou rondes, car l'ensemble ainsi constitué d'un ramasseur, d'une vis transporteuse et d'un transporteur ou convoyeur aval aurait un encombrement qui exigerait une modification profonde de tout le système d'attelage de la presse au tracteur, en créant ainsi un ensemble inacceptable.

Afin de résoudre le problème qui se pose dans cette technique comme indiqué précédemment, l'invention est matérialisée dans une presse à balles du type mentionné ci-avant caractérisée en ce qu'elle comporte un ramasseur ayant une largeur nettement supérieure à la largeur du corps de la presse et au-dessus et vers l'arrière duquel est montée une vis transporteuse transversale à double filet réalisant une convergence des produits de récolte, cette vis transporteuse étant disposée et agencée de telle sorte que les produits concentrés par elle soient transférés directement de ladite vis à l'intérieur de la chambre de formation de la balle de la presse.

Ce montage et cet agencement de la vis transporteuse dans des conditions telles qu'il en résulte un transfert direct des produits à l'intérieur de la chambre de formation de la balle de la presse permettent l'utilisation, sur une presse à balles cylindriques, d'un ramasseur de grande largeur sans modification du système d'attelage de la presse au tracteur et sans augmentation de l'encombrement, ce qui représente un avantage important.

On sait en outre que, dans une presse à balles cylindriques, étant donné que la section droite d'un andain n'est pas parfaitement rectangulaire et que l'accumulation des produits est plus grande vers la partie médiane de l'andain, le conducteur de la presse doit, pour éviter la production de balles dont la partie centrale est beaucoup plus serrée que les extrémités du fait de cette accumulation centrale des produits, faire progresser la presse sur l'andain selon un trajet sinueux afin de réaliser une certaine compensation.

L'invention résout également ce problème du fait que la vis transporteuse de concentration des produits prévue en arrière du ramasseur va avoir pour effet de charger les parties latérales de la chambre de formation de la balle à un degré plus important que la partie centrale, du fait du transfert direct des produits de la vis à cette chambre de formation de la balle, ce qui en fait assure une compensation du défaut précité et fournit une distribution transversale plus uniforme dans la chambre de la presse, sans que le conducteur ait besoin de faire progresser celle-ci selon un trajet sinueux comme indiqué précédemment.

Suivant une particularité, lorsque la presse comprend un transporteur inférieur délimitant en partie la chambre de formation de la balle, la vis transporteuse est disposée de façon telle que la zone de sortie des produits à partir de cette vis soit immédiatement voisine du rouleau de renvoi avant de ce transporteur inférieur, de sorte que les produits concentrés par la vis sont repris directement par ledit transporteur inférieur en vue de la formation de la balle.

La vis transporteuse peut, si des rouleaux de compression de la nappe de produits sont prévus, occuper une position telle que sa zone de sortie se trouve juste en avant de la commissure ménagée entre ces rouleaux de compression.

Ainsi, la vis transporteuse est intégrée au contour de la partie avant de la presse.

La longueur de la vis transporteuse est judicieusement sensiblement égale à la largeur du ramasseur.

Suivant une particularité, la vis transporteuse transversale est conjuguée à un capot qui recouvre au moins partiellement sa partie supérieure et qui s'étend vers l'arrière et vers le bas pour ménager une zone de sortie en forme de fente située en regard du brin supérieur du transporteur inférieur de la presse ou de la commissure entre les rouleaux assurant la compression des produits de récolte en une nappe. Ce capot s'étend vers le bas jusqu'à un niveau tel qu'il couvre en majeure partie le rouleau de compression supérieur de la presse, ce qui évite avec certitude tout entraînement des produits de récolte par le filet de la vis et leur échappement dans une zone rendant possible leur passage au-dessus de ce rouleau de compression supérieur, dans des conditions qui auraient pour conséquence un bourrage dans le corps de la presse en avant des bandes ou courroies antérieures, avec comme conséquence un arrêt du travail. Compte tenu de la forme adoptée pour ce capot, les produits sont au contraire dirigés positivement vers le transporteur inférieur de la presse ou la commissure entre les rouleaux de compression, ce qui présente un intérêt accru du fait de l'augmentation du débit des produits de récolte parvenant à la presse par suite de l'augmentation de la largeur efficace du ramasseur.

L'entraînement en rotation de la vis transporteuse peut avoir lieu à partir des mécanismes de la presse assurant également l'entraînement des transporteurs à bandes ou courroies servant à la formation de la balle.

La disposition des filets sur la vis transporteuse ou le profil de celle-ci est judicieusement étudié de façon à obtenir une sortie des produits à partir de la vis sur la totalité de la largeur de la presse, selon une répartition aussi uniforme que possible, ce qui apporte également une solution aux difficultés pouvant résulter d'une absence d'uniformité de la répartition des produits sur la largeur de la presse et en conséquence d'une différence de densité ou de diamètre sur la longueur de la balle en cours de formation.

Un agencement suivant l'invention semble particulièrement intéressant pour le ramassage de paille, qui peut être répartie sur le sol en bandes de grande largeur, par exemple dans le cas de moissonneuses-batteuses de largeur importante.

La description qui va suivre, faite en regard des dessins annexés, donnés à titre non limitatif, permettra de mieux comprendre l'invention.

La Figure 1 est une vue de profil schématique avec arrachement partiel d'une presse à balles suivant l'invention.

La Figure 2 est une vue en plan très schématisée montrant la disposition du ramasseur et de la vis conjuguée, à la partie avant de la presse.

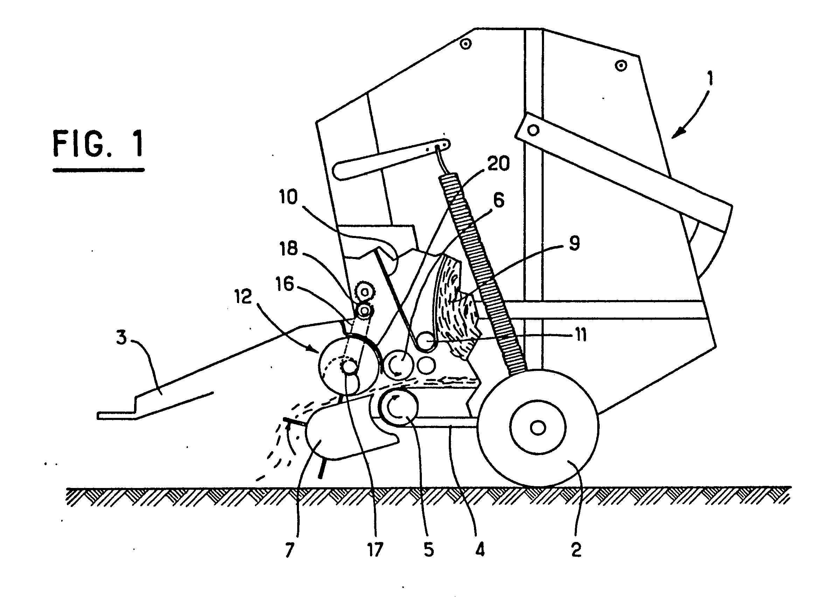

Sur la Fig. 1, on a désigné d'une façon générale par la référence 1 le corps d'une presse à balles cylindriques ou rondes de type classique, qui est supporté par des roues 2. La presse est destinée à être attelée de la manière habituelle à un véhicule tracteur par un timon ou une flèche d'attelage 3. On a indiqué en 4 le transporteur à bande inférieur de la presse et en 5 le rouleau de renvoi avant conjugué. La référence 6 désigne le rouleau de compression supérieur qui, de manière connue, est prévu de façon à coopérer avec le rouleau inférieur 5 et avec la bande 4 pour comprimer les produits de récolte ramassés sur le champ par un ramasseur 7 en une nappe indiquée en 8, laquelle subit sous l'effet de bandes ou courroies entraînées en rotation un enroulement sur elle-même, afin de former une balle cylindrique 9. On a indiqué en 10 les bandes ou courroies avant, qui passent sur un rouleau de renvoi inférieur 11.

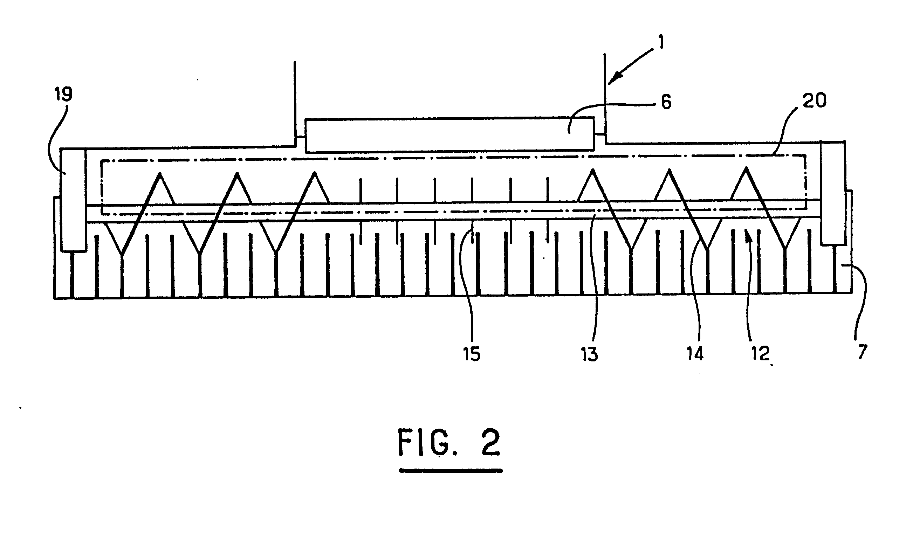

Suivant l'invention, et comme visible sur la Fig. 2, le ramasseur 7 de la presse a une largeur nettement supérieure à celle du corps 1 de cette presse. Il est prévu, en combinaison avec ce ramasseur 7, une vis transporteuse transversale 12 à effet convergent, qui comprend un noyau 13 et un double filet hélicoïdal 14 prévu vers les extrémités de la vis transporteuse, ainsi que des dents ou griffes médianes 15. La vis transporteuse s'étend sensiblement sur la même distance transversale que le ramasseur 7. Elle est entraînée en rotation, comme indiqué schématiquement sur la Fig. 1, au moyen d'une chaîne 16 passant sur un pignon 17 prévu à l'extrémité du noyau 13 de la vis transporteuse et sur un autre pignon 18 qui est entraîné lui-même à partir du mécanisme de la presse assurant l'entraînement des bandes ou courroies provoquant la formation de la balle. Cette transmission par chaîne est logée judicieusement dans un carter 19 prévu à une extrémité de la vis transporteuse 12.

Comme cela est visible également sur la Fig. 1, la vis transporteuse 12 est disposée au-dessus du ramasseur 7, vers la partie arrière de celui-ci et juste devant les rouleaux de compression 6, 5. La position en hauteur de cette vis transporteuse est telle que son double filet soit sensiblement tangent à la direction du flux de produits de récolte ramassés sur le champ par le ramasseur 7 et transférés aux rouleaux de compression 6, 5. Ainsi, la vis transporteuse 12 dirige directement ce flux de produits vers la commissure ménagée entre les rouleaux de compression 6, 5 et on voit sur la Fig. 1 qu'elle est immédiatement voisine de ces rouleaux de compression, de sorte que les produits qui la quittent parviennent dans cette commissure par un trajet minimum.

Afin de diriger avec certitude les produits de récolte vers la commissure ménagée entre les rouleaux 6, 5, la vis transporteuse transversale 12 est entourée étroitement, sur une partie de sa périphérie, par un capot 20 qui, comme visible sur la Fig. 1, peut être fixé sur la flèche d'attelage 3 vers sa partie supérieure, tandis que son bord inférieur est situé juste au-dessus de la commissure ménagée entre les rouleaux 6 et 5, afin de diriger avec certitude le flux des produits de récolte vers cette commissure et de s'opposer à tout échappement ou à tout passage desdits produits au-dessus du rouleau 6, ce qui provoquerait des bourrages susceptibles d'être à l'origine d'un arrêt de la presse. Le capot 20 a été indiqué en traits mixtes sur la Fig. 2.

On comprend à la lecture de ce qui précède que la presse à balles cylindriques faisant l'objet de l'invention est capable, lors de sa progression derrière un véhicule tracteur, de ramasser des produits de récolte reposant sur un champ, par exemple de la paille, sur une zone de grande largeur, nettement supérieure à la largeur du corps de la presse. Ces produits sont dirigés ensuite par l'effet de convergence exercé par la vis transporteuse à double filet vers la partie centrale du ramasseur, et ils sont transférés alors par les dents de cette vis transporteuse directement dans la commissure ménagée entre les rouleaux 6 et 5, en vue de leur compression en une nappe destinée à former la balle, tout échappement étant évité par le capot 20. Cette convergence des produits de récolte permet, du fait de leur ramassage sur une bande de terrain de grande largeur, d'obtenir une meilleure uniformité de répartition desdits produits sur la largeur de la presse, ce qui tend à réduire ou à éviter les difficultés qui résultent d'irrégularités de répartition sur cette largeur et en conséquence d'absences d'uniformité dans la densité ou le diamètre de la balle en cours de formation.

On résout ainsi, du fait de l'application à une presse à balles du type général considéré d'un ensemble comprenant un ramasseur et une vis transporteuse transversale, le problème de l'augmentation de débit des presses à balles, en vue de leur adaptation aux exigences du machinisme agricole moderne, sans devoir supporter les inconvénients qui résulteraient d'une augmentation de la largeur des presses à balles existantes.

Des modifications peuvent être apportées au mode de réalisation décrit, dans le domaine des équivalences techniques, sans s'écarter de l'invention.

**Revendications**

1. Presse à balles cylindriques ou rondes du type dans lequel un ramasseur (7) porté par la presse ramasse sur le sol des produits de récolte généralement disposés en andains et les transfère à une chambre de formation d'une balle dans laquelle la nappe de produits de récolte provenant du ramasseur subit un mouvement d'enroulement entre des jeux de bandes ou courroies (10) sans fin entraînées de façon positive, la balle étant, après sa formation, éjectée hors de la presse par une porte arrière, caractérisée en ce qu'elle comporte un ramasseur (7) ayant une largeur nettement supérieure à la largeur du corps (1) de la presse et au-dessus et vers l'arrière duquel est montée une vis transporteuse transversale (12) à double filet réalisant une convergence des produits de récolte, cette vis transporteuse étant disposée et agencée de telle sorte que les produits concentrés par ladite vis transporteuse soient transférés directement de celle-ci à l'intérieur de la chambre de formation de la balle de la presse.

2. Presse à balles cylindriques suivant la revendication 1, comprenant un transporteur inférieur (14) délimitant en partie la chambre de formation de la balle de la presse, caractérisée en ce que la vis transporteuse (12) est disposée de façon telle que la zone de sortie des produits à partir de cette vis transporteuse soit immédiatement voisine du rouleau de renvoi avant (5) de ce transporteur inférieur (4), de sorte que les produits concentrés par la vis sont repris directement par ledit transporteur inférieur pour leur enroulement en vue de la formation de la balle.

3. Presse à balles cylindriques suivant la revendication 1, comprenant des rouleaux de compression (5, 6) de la nappe de produits en vue de son enroulement, caractérisée en ce que la vis transporteuse (12) est disposée de façon telle que la zone de sortie des produits à partir de cette vis transporteuse se trouve juste en avant de la commissure ménagée entre ces rouleaux de compression (5, 6).

4. Presse à balles cylindriques suivant l'une quelconque des revendications précédentes, caractérisée en ce que la vis transporteuse (12) est intégrée au contour de la partie avant de la presse.

5. Presse à balles suivant l'une quelconque des revendications précédentes, caractérisée en ce que la longueur de la vis transporteuse (12) est sensiblement égale à la largeur du ramasseur (7) et en ce que le profil de cette vis est étudié de façon à assurer le transfert ou sortie des produits ramassés vers la chambre de formation sur une largeur sensiblement égale à la largeur de formation de la balle dans la presse.

6. Presse à balles suivant l'une quelconque des revendications précédentes, caractérisée en ce que la vis transporteuse (12) est conjuguée à un capot (20) qui recouvre au moins partiellement sa partie supérieure et qui s'étend vers l'arrière et vers le bas pour ménager une zone de transfert ou sortie vers la chambre de formation en forme de fente située en regard du brin supérieur du transporteur inférieur (4) de la presse ou de la commissure entre les rouleaux (6, 5) assurant la compression des produits de récolte en une nappe (8).

7. Presse à balles suivant la revendication 6, caractérisée en ce que, lorsque les produits de récolte sont comprimés en une nappe par des rouleaux de compression (6, 5), ce capot (20) s'étend vers le bas jusqu'à un niveau tel qu'il couvre en majeure partie le rouleau de compression supérieur (6) de la presse, pour éviter tout passage des produits de récolte au-dessus de ce rouleau.

8. Presse à balles suivant l'une quelconque des revendications précédentes, caractérisée en ce que la vis transporteuse (12) est entraînée en rotation à partir des mécanismes de la presse assurant également l'entraînement des transporteurs à bandes ou courroies (10) servant à la formation de la balle, notamment par une transmission par chaîne (16, 18).

## Claims

1. A cylindrical or round bale press of the type wherein a pick-up device (7) carried by the press picks up from the ground crop products which are generally disposed in windrows and transfers them to a bale forming chamber wherein the layer of crop materials from the pick-up device undergoes a rolling movement between sets of positively driven endless belts or bands (10), the bale, after being formed, being ejected from the press through a rear door, characterised in that it comprises a pick-up device (7) which is of a length that is markedly greater than the width of the body (1) of the press and above and towards the rear of which is mounted a transverse double-flight conveyor screw (12) which provides for convergence of the crop products, the conveyor screw being so disposed and arranged that the products which are concentrated by said conveyor screw are transferred directly therefrom to the interior of the bale forming chamber of the press.

2. A cylindrical bale press according to claim 1 comprising a lower conveyor (4) which partially defines the bale forming chamber of the press, characterised in that the conveyor screw (12) is so disposed that the region in which the products are discharged from the conveyor screw is immediately adjacent to the front guide roller (5) of said lower conveyor (4), whereby the products which are concentrated by the screw are picked up directly by said lower conveyor for winding thereof for formation of the bale.

3. A cylindrical bale press according to claim 1 comprising rollers (5, 6) for compressing the layer of crop products for winding thereof, characterised in that the conveyor screw (12) is so disposed that the region in which the crop products are discharged from the conveyor screw is just in front of the gap provided between said compression rollers (5, 6).

4. A cylindrical bale press according to any one of the preceding claims characterised in that the conveyor screw (12) is integrated in the contour of the front part of the press.

5. A bale press according to any one of the preceding claims, characterised in that the length of the conveyor screw (12) is substantially equal to the width of the pick-up device (7) and that the profile of said screw is designed to provide for transfer or discharge of the picked-up products towards the bale forming chamber over a width that is substantially equal to the bale forming width in the press.

6. A bale press according to any one of the preceding claims characterised in that the conveyor screw (12) is combined with a hood (20) which at least partially covers the upper part thereof and which extends rearwardly and downwardly to provide a region for transfer or discharge towards the bale forming chamber in the form of a slot disposed facing the upper run of the lower conveyor (4) of the press or the gap between the rollers (6, 5) providing for compression of the crop products in the form of a layer (8).

7. A bale press according to claim 6 characterised in that, when the crop products are compressed in the form of a layer by compression rollers (6, 5), said hood (20) extends downwardly to a level such that it covers the major part of the upper compression roller (6) of the press to prevent any crop products from passing above the roller.

8. A bale press according to any one of the preceding claims, characterised in that the conveyor screw (12) is driven in rotation from the mechanisms of the press which also provide for driving the belt or band conveyors (10) that serve for forming the bale, in particular by a chain transmission (16, 18).

## Ansprüche

1. Press für zylindrische oder runde Ballen des Typs, in der ein Aufsammler (7), der von der Presse getragen ist, auf dem Boden Ernteprodukte aufsammelt, die allgemein in Schwaden vorliegen, und sie in eine Ballenbildungskammer überführt, in der die Bahn der Ernteprodukte, die von dem Aufsammler kommt, einer Aufrollbewegung zwischen Sätzen von endlosen Bändern oder Riemen (10) unterworfen wird, die positiv angetrieben werden, wobei der Ballen nach seiner Bildung aus der Presse durch eine rüchwärtige Tür ausgeworfen wird, dadurch gekennzeichnet, dass sie einen Aufsammler (7) umfasst, der eine Breite aufweist, die wesentlich grösser als die Breite des Körpers (1) der Presse ist, und dass oberhalb und nach rüchwärts von diesem eine quer verlaufende doppelgängige Transportschnecke (12) montiert sit, welche eine Zusammenführung der Ernteprodukte verwirklicht, wobei diese Transportschnecke in der Weise angeordnet und betrieben wird, dass die Produkte, die durch die genannte Transportschnecke konzentriert worden sind, direkt von dieser in das Innere der Ballenbildungkammer der Presse überführt werden.

2. Presse für zylindrische Ballen nach Anspruch 1, welche einen unteren Förderer (4) umfasst, welcher die Ballenbildungskammer der Presse teilweise begrenzt, dadurch gekennzeichnet, dass die Transportschnecke (12) derart angeordnet ist, dass die Austrittszone der Produkte von dieser Transportschnecke sich in unmittelbarer Nachbarschaft der vorderen Umlenkrolle (5) des unteren Förderers (4) befindet, derart, dass die durch die Schnecke konzentrierten Produkte direkt von dem genannten unteren Förderer aufgenommen werden, um sie im Hinblick auf die Bildung des Ballens aufzurollen.

3. Presse für zylindrische Ballen nach Anspruch 1, welche Druckrollen (5, 6) für die Bahn der Produkte im Hinblick auf deren Zusammenrollung umfasst, dadurch gekennzeichnet, dass die Transportschnecke (12) derart angeordnet ist, dass sich die Austrittszone der Produkte von dieser Transportschnecke gerade vor dem Spalt befindet, der zwischen den Druckrollen (5, 6) gebildet ist.

4. Presse für zylindrische Ballen nach irgendeinem der voranstehenden Ansprüche, dadurch gekennzeichnet, dass die Transportschnecke (12) in den Umriss des vorderen Bereiches der Presse integriert ist.

5. Presse für Ballen nach irgendeinem der voranstehenden Ansprüche, dadurch gekennzeichnet, dass die Länge der Transportschnecke (12) ziemlich gleich der Breite des Aufsammlers (7) ist und dass das Profil dieser Schnecke so ausgearbeitet ist, dass eine Überführung oder ein Austreten der aufgesammelten Produkte in Richtung auf die Bildungskammer auf einer Breite sichergestellt ist, die im wesentlichen gleich der zu bildenden Breite des Ballens in der Presse ist.

6. Presse für Ballen nach irgendeinem der voranstehenden Ansprüche, dadurch gekennzeichnet, dass die Transportschnecke (12) einer Abdeckung (20) zugeordnet ist, welche wenigstens zum Teil deren oberen Bereich überdeckt und welche sich nach rückwärts und nach unten erstreckt, um eine Überführungs- oder Austrittszone zur Bildungskammer hin in Form eines Spaltes zu bilden, der dem oberen Trum des unteren Förderers (4) der Presse oder dem Spalt zwischen den Rollen (6, 5) gegenüberliegt, welche das Zusammendrücken der Ernteprodukte in eine Bahn (8) sicherstellen.

7. Presse für Ballen nach Anspruch 6, dadurch gekennzeichnet, dass dann, wenn die Ernteprodukte durch die Druckrollen (6, 5) in eine bahn zusammengedrückt sind, die Abdeckung (20) sich nach unten erstreckt bis auf eine Höhe derart, dass sie den grösseren Teil der oberen Druckrolle (6) der Presse abdeckt, um jedes Passieren der Ernteprodukte über diese Rolle hinweg zu vermeiden.

8. Presse für Ballen nach irgendeinem der voranstehenden Ansprüche, dadurch gekennzeichnet, dass die Transportschnecke (12) von einem Mechanismus der Presse aus drehend angetrieben wird, der gleichermassen auch den Antrieb der Band — oder Riemenförderer (10) sicherstellt, welche der Bildung des Ballens dienen, insb. über eine Kettentransmission (16, 18).

# FIG. 1

FIG. 2